# EUROPEAN PATENT APPLICATION

(11) **EP 4 502 620 A1**
(43) Date of publication of application: **05.02.2025**
(21) Application number: 23778949.0
(22) Date of filing: 14.02.2023
(51) Int. Cl.: G01P 3/40, D03J 1/00, D03J 1/24

(54) **LOOM STROBOSCOPE, AND OBSERVATION SYSTEM**

(30) Priority: 28.03.2022 JP 2022051670
(71) Applicant: KABUSHIKI KAISHA TOYOTA JIDOSHOKKI, Kariya-shi, Aichi 448-8671 (JP)
(72) Inventor: SUZUKI, Akihiro, Kariya-shi, Aichi 448-8671 (JP)
(74) Representative: TBK
(86) International application number: PCT/JP2023/005059
(87) International publication number: WO 2023/188915

(57) **Abstract**

A loom stroboscope (101) comprises: a strobe unit (30) having a light emitter (32) provided to a first surface of a housing so that the optical axis thereof extends in a direction orthogonal to the longitudinal direction of the housing, a camera (33), and an operating unit (34) provided to a second surface of the housing; and a control/communication unit (40) having a device control unit for controlling the light emitter (32) and the camera (33), a scope communication unit (43) for communicating with an external setting terminal (102), and an image data storage unit (42) for storing image data captured by the camera (33). The device control unit controls the light emitter (32) and the camera (33) on the basis of setting information relating to the light emitter (32) and the camera (33) that is received from the external setting terminal (102) via the scope communication unit (43). The scope communication unit (43) transmits the image data stored in the image data storage unit (42) to the external setting terminal (102).

## Description

### TECHNICAL FIELD

The present invention relates to a loom stroboscope and an observation system.

### BACKGROUND ART

Conventionally, observation has been carried out using a stroboscope. The stroboscope of Patent Document 1 includes a housing having a rectangular parallelepiped shape, a light emitter disposed in the housing, and a video camera disposed in the housing. The optical axis of the light emitter extends in the longitudinal direction of the housing.

### Citation List

### [Patent Document]

[Patent Document 1] Japanese Utility Model Application Publication No. S55-118121

### SUMMARY OF THE INVENTION

### Technical Problem

A stroboscope is used for observation of a loom. When the loom is an air jet loom, the air jet loom includes a main nozzle from which a weft yarn is ejected with air, and a reed that is disposed on a downstream side of the main nozzle in a weft insertion direction corresponding to a direction in which the weft yarn is ejected. The weft yarn ejected from the main nozzle travels through a weft yarn traveling passage provided within the reed. An operator may arrange a stroboscope on an upstream side of the reed in the weft insertion direction in order to observe the traveling state of the weft yarn at the entrance of the weft yarn travelling passage.

However, on the upstream side of the reed in the weft insertion direction, not only the main nozzle but also pipes, valves, and the like for connecting the main nozzle with an air tank are arranged. Therefore, a sufficient space for placing the stroboscope may not be secured. In particular, in a case of a stroboscope in which an optical axis of a light emitter extends in a longitudinal direction of a housing as in Patent Document 1, a space required for placing the stroboscope becomes large.

To solve this problem, for example, by providing a light emitter in a housing so that the optical axis extends in a direction perpendicular to the longitudinal direction of the housing, a stroboscope in which the dimensions of the housing in the direction in which the optical axis extends are relatively small may be used. In this case, the space required for placing the stroboscope is reduced. However, in a stroboscope, an operation unit for operating the stroboscope is provided on a side of the housing opposite to a side on which the light emitter is provided, and thus the operation unit is covered by parts of the loom, which makes it difficult for the operator to operate the operation unit.

### Solution to Problem

A loom stroboscope for solving the above-mentioned problems includes: a strobe unit including a housing having a rectangular parallelepiped shape and having a first surface and a second surface on a side of the housing opposite to the first surface, a light emitter provided on the first surface of the housing such that an optical axis of the light emitter extends in a direction perpendicular to a longitudinal direction of the housing, a camera provided on the first surface of the housing so as to capture an image of an area illuminated by the light emitter, and an operation unit provided on the second surface of the housing and configured to operate the light emitter and the camera; and a control communication unit including a device control unit configured to control the light emitter and the camera, a scope communication unit configured to communicate with an external setting device on which setting information relating to the light emitter and the camera is input, and a captured image data storage unit configured to store a captured image data captured by the camera, characterized in that the device control unit controls the light emitter and the camera based on the setting information relating to the light emitter and the camera received from the external setting device via the scope communication unit, and the scope communication unit transmits the captured image data stored in the captured image data storage unit to the external setting device.

Since the loom stroboscope has the scope communication unit, the loom stroboscope is capable of communicating with the external setting device. The device control unit controls the light emitter and the camera based on the setting information relating to the light emitter and the camera received from the external setting device via the scope communication unit. Therefore, even in a situation where it is difficult to operate the operation unit, the operator can operate the light emitter and the camera using the external setting device.

In addition, the scope communication unit transmits the captured image data stored in the captured image data storage unit to the external setting device. Therefore, even in a situation where visual observation is difficult, the operator can make observation using the captured image data received by the external setting device.

In the loom stroboscope, the strobe unit and the control communication unit may be separate bodies.

If the strobe unit and the control communication unit are integrated, a space for placing both the strobe unit and the control communication unit is required. In contrast, when the strobe unit and the control communication unit are separate bodies, only the space for placing the strobe unit needs to be secured, so that observation can be accomplished in a smaller space.

The above loom stroboscope may include a data generation unit that generates a data set including a source code based on which an observation screen is generated and the captured image data, the observation screen including a setting screen on which the setting information is input and a captured image data display screen on which the captured image data is displayed, and the scope communication unit may transmit the data set generated by the data generation unit to the external setting device.

When the scope communication unit transmits only the image data to the external setting device, in order for the external setting device to display the observation screen, the observation screen needs to be generated from the setting screen and the captured image data received from the scope communication unit. Additionally, in order for the external setting device to generate the observation screen from the setting screen and the captured image data received from the scope communication unit, the external setting device needs to store the setting screen. For this reason, an application for generating the setting screen has to be installed in the external setting device. In contrast, when the data generation unit generates a data set including the source code and the captured image data based on which the observation screen is generated, and the scope communication unit transmits the data set to the external setting device, the observation screen may be displayed based on the data set even if an application for generating the observation screen is not installed in the external setting device.

An observation system for solving the above-mentioned problems includes: a loom stroboscope including a strobe unit including a housing having a rectangular parallelepiped shape and having a first surface and a second surface on a side of the housing opposite to the first surface, a light emitter provided on the first surface of the housing such that an optical axis of the light emitter extends in a direction perpendicular to a longitudinal direction of the housing, a camera provided on the first surface of the housing so as to capture an image of an area illuminated by the light emitter, and an operation unit provided on the second surface of the housing and configured to operate the light emitter and the camera, and a control communication unit including a device control unit configured to control the light emitter and the camera, a scope communication unit, a captured image data storage unit configured to store a captured image data captured by the camera; and an external setting device including an input unit from which setting information relating to the light emitter and the camera is input, a display unit, and an external communication unit configured to communicate with the scope communication unit, characterized in that the external setting device transmits the setting information relating to the light emitter and the camera input from the input unit to the loom stroboscope via the external communication unit, the device control unit controls the light emitter and the camera based on the setting information received from the external setting device via the scope communication unit, the loom stroboscope transmits the captured image data stored in the captured image data storage unit to the external setting device via the scope communication unit, and the display unit displays the captured image data received by the external communication unit from the loom stroboscope.

The loom stroboscope includes the scope communication unit. The external setting device includes the external communication unit. Thus, the loom stroboscope and the external setting device are communicable with each other. The device control unit controls the light emitter and the camera based on the setting information relating to the light emitter and the camera received from the external setting device via the scope communication unit. Therefore, even in a situation where it is difficult to operate the operation unit, the operator can operate the light emitter and the camera using the external setting device.

In addition, the scope communication unit transmits the captured image data stored in the captured image data storage unit to the external setting device. The display unit displays the captured image data received by the external communication unit from the loom stroboscope. Thus, the operator can observe using the captured image data displayed on the display unit even in a situation where visual observation is difficult.

In the above observation system, the external setting device may be a function panel provided in a machine base of the loom.
The captured image data is transmitted to the function panel provided in the loom base. For this reason, leakage of captured image data is less likely to occur as compared to a case where the external setting device is a portable device such as a smartphone or a tablet terminal, for example.

### Advantageous Effects of Invention

According to the present invention, it is possible to operate the light emitter and the camera even in a situation where it is difficult to operate the operation unit.

### BRIEF DESCRIPTION OF DRAWINGS

FIG. 1 is a block diagram illustrating a configuration of an observation system.
FIG. 2 is a schematic view illustrating a configuration of a weft insertion device.
FIG. 3 is a perspective view of a strobe unit.
FIG. 4 is a perspective view of the strobe unit.
FIG. 5 is a chart for describing the relationship between an external input signal and a trigger signal.
FIG. 6 is a schematic view illustrating an observation screen displayed on a touch panel of an external setting terminal.

### DESCRIPTION OF EMBODIMENTS

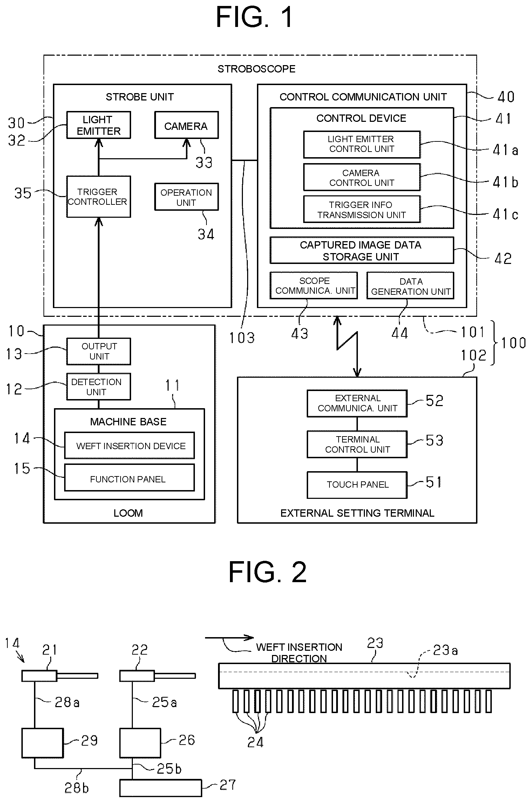

Hereinafter, an embodiment of a loom stroboscope and an observation system will be described with reference to FIGS. 1 to 6. The loom stroboscope is a stroboscope used for observation of a loom. The observation system is a system used for observation of the loom.

### Loom

As illustrated in FIG. 1, a loom 10 includes a machine base 11, a detection unit 12, and an output unit 13. The machine base 11 includes a weft insertion device 14 and a function panel 15. The loom 10 of the present embodiment is an air jet loom that inserts a weft yarn with air.

As illustrated in FIG. 2, the weft insertion device 14 includes a tandem nozzle 21, a main nozzle 22, a reed 23, and a plurality of sub-nozzles 24. The tandem nozzle 21 draws out a weft yarn from a storage drum (not illustrated). The weft yarn drawn out by the tandem nozzle 21 is ejected from the main nozzle 22. A direction in which the weft yarn is ejected from the main nozzle 22 is defined as a weft insertion direction. The reed 23 is disposed on a downstream side of the main nozzle 22 in the weft insertion direction. The weft yarn ejected from the main nozzle 22 travels through a weft yarn travelling passage 23a provided within the reed 23. The sub-nozzles 24 are arranged in the weft insertion direction. Air is ejected from the sub-nozzles 24 toward the weft yarn travelling through the weft yarn travelling passage 23a.

The main nozzle 22 is connected to a main valve 26 via a first main pipe 25a. The main valve 26 is connected to an air tank 27 via a second main pipe 25b. The tandem nozzle 21 is connected to a tandem valve 29 via a first tandem pipe 28a. The tandem valve 29 is connected to the air tank 27 that is commonly used for the main valve 26 via a second tandem pipe 28b. The pipes 25a, 25b, 28a, 28b and the valves 26, 29 are disposed on an upstream side of the reed 23 in the weft insertion direction.

The main nozzle 22, the reed 23, and the plurality of sub-nozzles 24 are disposed on a sley (not illustrated). The main nozzle 22, the reed 23, the plurality of sub-nozzles 24, and the slay are swung back and forth in the front- rear direction of the loom 10.

A timing at which the weft yarn is ejected from the main nozzle 22 corresponds to a rotation angle of a main shaft (not illustrated) of the machine base 11. The main shaft is driven by a main motor (not illustrated). Specifically, when the main shaft rotates from a specific rotation angle by a predetermined angle, the weft yarn is ejected from the main nozzle 22. In the following description, the specific rotation angle of the main shaft is referred to as a reference angle. A delay with respect to the reference angle is defined as a delay angle.

The detection unit 12 detects the rotation angle of the main shaft. The detection unit 12 is, for example, a rotary encoder. The detection unit 12 is connected to the output unit 13. The detection unit 12 transmits a detection result to the output unit 13. The output unit 13 outputs a signal to the stroboscope every time the rotation angle of the main shaft detected by the detection unit 12 becomes the reference angle determined in advance. For example, when the reference angle is 0° , the output unit 13 outputs a signal every time the rotation angle of the main shaft becomes 0° .

### Observation system

As illustrated in FIG. 1, an observation system 100 includes a loom stroboscope 101 and an external setting terminal 102.

### Loom stroboscope

The loom stroboscope 101 includes a strobe unit 30 and a control communication unit 40. In the present embodiment, the strobe unit 30 and the control communication unit 40 are separate bodies. The strobe unit 30 and the control communication unit 40 are connected by a wire or wirelessly. In the present embodiment, the strobe unit 30 and the control communication unit 40 are connected by a connection cable 103.

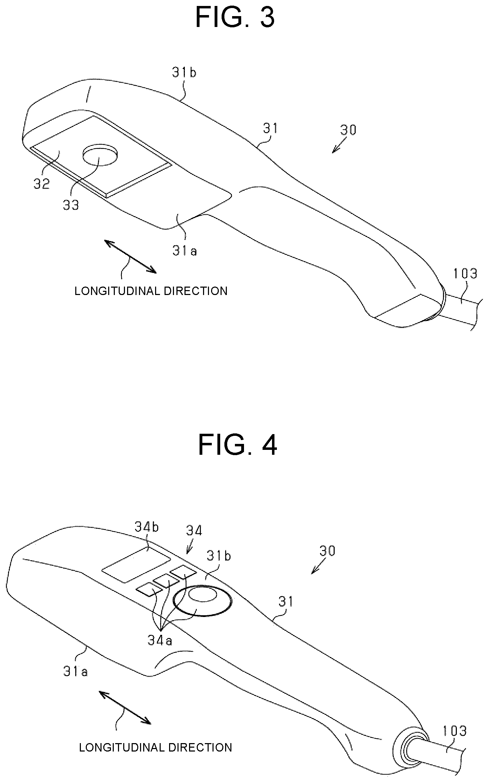

As illustrated in FIGS. 3 and 4, the strobe unit 30 has a housing 31, a light emitter 32, a camera 33, an operation unit 34, and a trigger control unit 35. It is noted that the trigger control unit 35 is built in the housing 31 and not illustrated in FIGS. 3 and 4.

The housing 31 has a substantially rectangular parallelepiped shape. The housing 31 has a first surface 31a and a second surface 31b. The first surface 31a and the second surface 31b are surfaces substantially perpendicular to a direction in which an optical axis of the light emitter 32 extends, which will be described later. The second surface 31b is a surface located opposite to the first surface 31a. A direction in which the first surface 31a and the second surface 31b form a pair is defined as a thickness direction of the housing 31. The connection cable 103 is connected to a first end portion of the housing 31 in a longitudinal direction thereof. The housing 31 of the present embodiment has a shape that is narrowed in a portion between ends of the housing 31 in the longitudinal direction so that an operator can easily grip the housing 31.

The light emitter 32 includes, for example, a plurality of LED lights (not illustrated). The light emitter 32 is provided in a second end portion of the housing 31 in the longitudinal direction. The second end portion of the housing 31 in the longitudinal direction is an end portion located opposite to the first end portion of the housing 31 in the longitudinal direction. The light emitter 32 is provided on the first surface 31a of the housing 31. The optical axis of the light emitter 32 extends in the thickness direction of the housing 31. That is, the optical axis of the light emitter 32 extends in a direction substantially perpendicular to the longitudinal direction of the housing 31.

The camera 33 is an image capturing device. The camera 33 has a lens and an imaging device. The camera 33 is provided in the housing 31 so as to capture an image of an area illuminated by the light emitter 32. The camera 33 is provided in the second end portion of the housing 31 in the longitudinal direction. The camera 33 is provided on the first surface 31a of the housing 31. In the present embodiment, the plurality of LED lights forming the light emitter 32 are arranged to surround the camera 33. The plurality of LED lights are not limited to those surrounding the camera 33, and may be arranged in any positions.

The strobe unit 30 is disposed relative to the loom 10 such that the light emitter 32 illuminates an object to be observed and the camera 33 captures an image of the object to be observed.

The operation unit 34 is a part for operating the light emitter 32 and the camera 33. The operation unit 34 is provided in the second end portion of the housing 31 in the longitudinal direction. The operation unit 34 is provided on the second surface 31b of the housing 31. That is, the operation unit 34 is provided on the surface of the housing 31 opposite to the surface on which the light emitter 32 and the camera 33 are provided.

The operation unit 34 includes an input unit 34a and a display screen 34b. The input unit 34a is, for example, a dial or a button from which pieces of setting information relating to the light emitter 32 and the camera 33 are input. The pieces of the setting information relating to the light emitter 32 and the camera 33 includes setting information relating to the light emitter 32, setting information relating to the camera 33, and setting information relating to a trigger signal. Each of the pieces of the setting information will be described later. The display screen 34b displays the pieces of the setting information relating to the light emitter 32 and the camera 33 that are currently set. The operator operates the light emitter 32 and the camera 33 by operating the input unit 34a while checking the display screen 34b.

The trigger control unit 35 includes a processor and a storage unit. For example, a CPU (Central Processing Unit), a GPU (Graphics Processing Unit), or a DSP (Digital Signal Processor) is used as the processor. The storage unit includes a RAM (Random Access Memory) and a ROM (Read Only Memory). The storage unit stores program codes or instructions configured to cause the processor to execute processing. The storage unit, i.e., the computer-readable medium, includes any available medium accessible by a general-purpose or a dedicated computer. The trigger control unit 35 may be configured by a hardware circuit such as an ASIC (Application Specific Integrated Circuit) or an FPGA (Field Programmable Gate Array). The trigger control unit 35, which is a processing circuit, may include one or more processors operating in accordance with computer programs, one or more hardware circuits such as an ASIC or FPGA, or a combination thereof.

As illustrated in FIG. 1, the light emitter 32 is connected to the trigger control unit 35. The light emitter 32 emits light when a trigger signal is input from the trigger control unit 35. The camera 33 is connected to the trigger control unit 35. The camera 33 captures an image when the trigger signal is input from the trigger control unit 35. The trigger signal of the present embodiment is a signal for causing the light emitter 32 to emit light and the camera 33 to capture an image.

The trigger control unit 35 controls the trigger signal. In other words, the trigger control unit 35 controls a light emission timing of the light emitter 32 and an image capture timing of the camera 33. The trigger control unit 35 is connected to the output unit 13 of the loom 10. A signal output by the output unit 13 is input to the trigger control unit 35 as an external input signal. Further, the trigger control unit 35 receives the delay angle from the operation unit 34 or the control communication unit 40. The trigger control unit 35 controls the trigger signal based on the external input signal input from the loom 10 and the delay angle input from the operation unit 34 or the control communication unit 40.

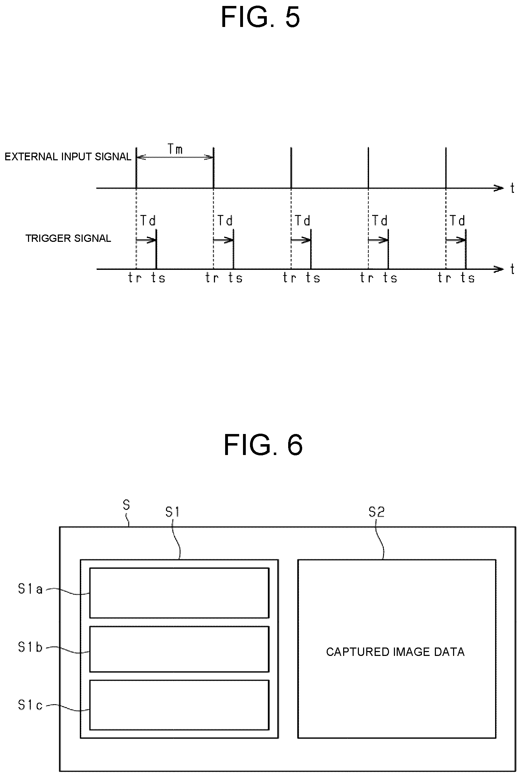

As shown in FIG. 5, the trigger control unit 35 grasps a rotation cycle Tm of the main shaft from intervals at which the external input signal is input. The trigger control unit 35 converts the delay angle to a delay time Td using the rotation cycle Tm of the main shaft and the reference angle. The trigger control unit 35 outputs a trigger signal to the light emitter 32 and the camera 33 at a time ts when the delay time Td elapses from a time tr at which the external input signal is input. That is, the trigger control unit 35 outputs a trigger signal to the light emitter 32 and the camera 33 when the rotation angle of the main shaft is rotated by the delay angle from the reference angle.

As illustrated in FIG. 1, the control communication unit 40 includes a control device 41, a captured image data storage unit 42, a scope communication unit 43, and a data generation unit 44.

The control device 41 includes a processor and a storage unit. For example, a CPU (Central Processing Unit), a GPU (Graphics Processing Unit), or a DSP (Digital Signal Processor) is used as the processor. The storage unit includes a RAM (Random Access Memory) and a ROM (Read Only Memory). The storage unit stores program codes or instructions configured to cause the processor to execute processing. The memory, i.e., the computer-readable medium, includes any available medium accessible by a general-purpose or a dedicated computer. The control device 41 may be configured by a hardware circuit such as an ASIC (Application Specific Integrated Circuit) or an FPGA (Field Programmable Gate Array). The control device 41, which is a processing circuit, may include one or more processors operating in accordance with computer programs, one or more hardware circuits such as an ASIC or FPGA, or a combination thereof.

The control device 41 controls the strobe unit 30, the scope communication unit 43, and the data generation unit 44. The control device 41 includes a light emitter control unit 41a, a camera control unit 41b, and a trigger information transmission unit 41c. The light emitter control unit 41a controls the camera 33 based on the setting information relating to the light emitter 32. Examples of the setting information relating to the light emitter 32 include a light color and a light emission time.. The camera control unit 41b controls the camera 33 based on the setting information relating to the camera 33. Examples of the setting information relating the camera 33 include exposure time, gain, gamma, and white balance. The trigger information transmission unit 41c transmits the setting information relating to the trigger signal to the trigger control unit 35. Examples of the setting information relating to trigger signal include the delay angle. The trigger control unit 35 controls the trigger signal based on the setting information relating to the trigger signal transmitted from the trigger information transmission unit 41c.

The trigger control unit 35, the light emitter control unit 41a, and the camera control unit 41b cooperate to form a device control unit that controls the light emitter 32 and the camera 33 based on the pieces of the setting information relating to the light emitter 32 and the camera 33.

The captured image data storage unit 42 stores captured image data transmitted from the camera 33 via the connection cable 103. The captured image data is an image and/or a moving image captured by the camera 33.

The scope communication unit 43 communicates with the external setting terminal 102 under the control of the control device 41. The scope communication unit 43 of the present embodiment is a wireless communication device. The scope communication unit 43 of the present embodiment transmits and receives information to and from the external setting terminal 102 via Wi-Fi.

The data generation unit 44 generates a data set under the control of the control device 41. The data set includes data that is used when an observation screen S, which will be described later, is displayed on a browser screen. Specifically, the data set includes a source code based on which the observation screen S is generated, and the captured image data. The source code is stored in the data generation unit 44 in advance. The data generation unit 44 obtains the captured image data from the captured image data storage unit 42. The data generation unit 44 generates a data set using the stored source code and the captured image data obtained from the captured image data storage unit 42.

When the scope communication unit 43 receives a request for a data set from the external setting terminal 102, the control device 41 causes the data generation unit 44 to generate a data set. The control device 41 causes the scope communication unit 43 to transmit the data set generated by the data generation unit 44 to the external setting terminal 102.

### External setting terminal

The external setting terminal 102 is an external setting device for inputting the pieces of the setting information relating to the light emitter 32 and the camera 33 of the loom stroboscope 101. The external setting terminal 102 of the present embodiment is a communication terminal such as a smartphone or a tablet terminal.

As illustrated in FIG. 1, the external setting terminal 102 includes a touch panel 51, an external communication unit 52, and a terminal control unit 53. The touch panel 51 serves as both an input unit and a display unit. The external communication unit 52 is a wireless communication device. The terminal control unit 53 includes a CPU and a memory, neither of which is illustrated. The terminal control unit 53 performs integrated control of the external setting terminal 102. The terminal control unit 53 controls the touch panel 51 and the external communication unit 52. A browser application is installed in the memory of the terminal control unit 53.

When the browser application is started, the terminal control unit 53 causes the browser screen to be displayed on the touch panel 51. When the external communication unit 52 receives the data set generated by the data generation unit 44 from the scope communication unit 43, the terminal control unit 53 causes the observation screen S to be displayed on the browser screen based on the received data set. That is, the terminal control unit 53 causes the observation screen S to be displayed on the touch panel 51.

As illustrated in FIG. 6, the observation screen S displayed on the touch panel 51 includes a setting screen S1 and a captured image data display screen S2. The setting screen S1 is a screen on which the pieces of the setting information relating to the light emitter 32 and the camera 33 are input. Specifically, the setting screen S1 has a screen S1a for inputting the setting information relating to the light emitter 32, a screen S1b for inputting the setting information relating to the camera 33, and a screen S1c for inputting the setting information relating to the trigger signal. On the captured image data display screen S2, the captured image data included in the data set received by the external communication unit 52 is displayed.

When the pieces of the setting information relating to the light emitter 32 and the camera 33 are input to the setting screen S1, the terminal control unit 53 causes the external communication unit 52 to transmit the input pieces of the setting information relating to the light emitter 32 and the camera 33 to the scope communication unit 43.

### Operation of the present embodiment

The operation of the present embodiment will be described.

In the present embodiment, the operator observes a travelling state of the weft yarn at an entrance of the weft yarn travelling passage 23a. For this reason, the strobe unit 30 is disposed on the upstream side of the reed 23 in the weft insertion direction so that the light emitter 32 illuminates the entrance of the weft yarn travelling passage 23a and the camera 33 captures an image of the entrance of the weft yarn travelling passage 23a.

As described above, the components of the weft insertion device 14, such as the main nozzle 22, the pipes 25a, 25b, 28a, 28b, and the valves 26, 29, are disposed on the upstream side of the reed 23 in the weft insertion direction. The main nozzle 22 swings back and forth in the front-rear direction of the loom 10. Therefore, the strobe unit 30 is disposed so that the second end portion of the housing 31 in the longitudinal direction is inserted into a gap between the components of the weft insertion device 14 so as not to interfere with the main nozzle 22.

In the present embodiment, a range illuminated by the light emitter 32 and an imaging range of the camera 33 include tips of two of the sub-nozzles 24 located on the upstream side of the plurality of sub-nozzles 24 arranged in the weft insertion direction. The strobe unit 30 is fixed to a desired position relative to the loom 10 with a fixing device (not illustrated).

When the strobe unit 30 is disposed on the upstream side of the reed 23 in the weft insertion direction in this manner, the operation unit 34 may be covered by the components of the weft insertion device 14. In this case, the operator operates the light emitter 32 and the camera 33 with the external setting terminal 102. The operation of the light emitter 32 and the camera 33 with the external setting terminal 102 will be described in detail below.

The operator operates the touch panel 51 of the external setting terminal 102 to start the browser application. The operator accesses, in the browser application, an observation web page, which is a web page created for observation of the loom 10. The operator enters a user ID and a password on the observation web page displayed on the browser screen to log in. Subsequently, the external setting terminal 102 transmits a request for a data set to the loom stroboscope 101 via the external communication unit 52.

When the scope communication unit 43 receives the request for the data set from the external setting terminal 102, the data generation unit 44 generates the data set. The loom stroboscope 101 transmits the data set generated by the data generation unit 44 to the external setting terminal 102 via the scope communication unit 43. As described above, the data set includes the captured image data stored in the captured image data storage unit 42. In other words, the scope communication unit 43 transmits the captured image data stored in the captured image data storage unit 42 to the external setting terminal 102.

As a result, the observation screen S is displayed on the browser screen on the touch panel 51. The operator can observe the travelling state of the weft yarn with the captured image data displayed on the captured image data display screen S2 of the observation screen S. Additionally, the operator can input the pieces of the setting information relating to the light emitter 32 and the camera 33 on the setting screen S1 of the observation screen S by operating the touch panel 51. The external communication unit 52 transmits the pieces of the setting information relating to the light emitter 32 and the camera 33 inputted through the touch panel 51 to the loom stroboscope 101.

The device control unit controls the light emitter 32 and the camera 33 based on the pieces of the setting information input from the external setting terminal 102 via the scope communication unit 43. Specifically, when the setting information relating to the light emitter 32 is input from the external setting terminal 102, the light emitter control unit 41a controls the light emitter 32 based on the input setting information. When the setting information relating to the camera 33 is input from the external setting terminal 102, the camera control unit 41b controls the camera 33 based on the input setting information. When the setting information relating to the trigger signal is input from the external setting terminal 102, the trigger information transmission unit 41c transmits the input setting information relating to the trigger signal to the trigger control unit 35. The trigger control unit 35 controls the trigger signal based on the setting information relating to the trigger signal transmitted from the trigger information transmission unit 41c.

### Effects of the present embodiment

The effects of the present embodiment will be described.
(1) The loom stroboscope 101 includes the scope communication unit 43. The external setting terminal 102 includes the external communication unit 52. Thus, the loom stroboscope 101 and the external setting terminal 102 communicate with each other. The device control unit controls the light emitter 32 and the camera 33 based on the pieces of the setting information relating to the light emitter 32 and the camera 33 received from the external setting terminal 102 via the scope communication unit 43. Thus, even in a situation where it is difficult to operate the operation unit 34, the operator can operate the light emitter 32 and the camera 33 using the external setting terminal 102.

In addition, the scope communication unit 43 transmits the captured image data stored in the captured image data storage unit 42 to the external setting terminal 102. On the touch panel 51 of the external setting terminal 102, the captured image data received by the external communication unit 52 from the loom stroboscope 101 is displayed. Thus, the operator can carry out the observation using the captured image data displayed on the touch panel 51 even in a situation where visual observation is difficult. Examples of the situation where visual observation is difficult include a situation where an operator cannot view the object to be observed from a desired position, and a situation where the visual observation is possible but forces the operator to be in an awkward observation posture.

(2) If the strobe unit 30 and the control communication unit 40 are integrated, a space for placing both the strobe unit 30 and the control communication unit 40 is required. In contrast, in the present embodiment, the strobe unit 30 and the control communication unit 40 are separate bodies. In this case, since it is only necessary to secure a space for placing the strobe unit 30, observation can be carried out with a smaller space.

(3) In a case where the scope communication unit 43 transmits only the captured image data to the external setting terminal 102, the observation screen S has to be generated from the setting screen S1 and the captured image data received from the scope communication unit 43 in order for the external setting terminal 102 to display the observation screen S. Additionally, in order for the external setting terminal 102 to generate the observation screen S from the setting screen S1 and the captured image data received from the scope communication unit 43, the setting screen S1 needs to be stored in the external setting terminal 102. Therefore, an application for generating the observation screen S has to be installed in the external setting terminal 102. In contrast, in the present embodiment, the data generation unit 44 generates the data set including the source code based on which the observation screen S is generated and the captured image data, and the scope communication unit 43 transmits the data set to the external setting terminal 102. This allows the external setting terminal 102 to display the observation screen S based on the data set even if an application for generating the observation screen S is not installed in the external setting terminal 102.

### Modification

The above embodiment may be modified as follows. The above-described embodiment and the following modification may be combined within a technically consistent range.

The strobe unit 30 and the control communication unit 40 may be integrated. In this case, the control communication unit 40 may be built into the housing 31 of the strobe unit 30.

The strobe unit 30 and the control communication unit 40 may communicate wirelessly. In this case, the strobe unit 30 includes a wireless communication device.

The control communication unit 40 does not have to include the data generation unit 44. In this case, an observation application is installed in the terminal control unit 53. The observation application includes a program that causes the CPU of the terminal control unit 53 to perform screen generation processing and display processing. As the screen generation processing, the terminal control unit 53 generates the observation screen S using the setting screen S1 stored in the memory of the terminal control unit 53 and the captured image data received by the external communication unit 52 from the loom stroboscope 101. As the display processing, the terminal control unit 53 causes the generated observation screen S to be displayed on the touch panel 51.

The observation system 100 may include a plurality of loom stroboscopes 101 and one external setting terminal 102. The external setting terminal 102 is connected to each of the plurality of loom stroboscopes 101. In this case, when one operator operates or observes a plurality of looms 10, the operator can operate and observe without having to travel around the plurality of looms 10.

The external setting terminal 102 may display the captured image data of the plurality of loom stroboscopes 101 simultaneously. In this case, the operator can observe the plurality of looms 10 simultaneously.

The observation system 100 may include one loom stroboscope 101 and a plurality of external setting terminals 102. In this case, if a plurality of operators each carry the external setting terminal 102, the pieces of the setting information relating to the light emitter 32 and the camera 33 and the captured image data can be shared between the operators. Therefore, for example, the operator can operate the light emitter 32 and the camera 33 and perform observation while communicating with other operators by voice call or the like.

The external setting device may be, for example, a touch panel that serves as both an input unit and a display unit. In this case, the touch panel and the control communication unit 40 communicate with each other via a communication cable. The touch panel has a connection port as the external communication unit 52 to which one end of the communication cable is connected. In addition, the control communication unit 40 has a connection port as the scope communication unit 43 to which the other end of the communication cable is connected. The touch panel and the control communication unit 40 can transmit and receive information stably as compared with a case of wireless communication.

The external setting device may include an input unit and a display unit separately. The input unit is, for example, a mouse and a keyboard. The display unit is, for example, a display.

In a case where the external setting device and the control communication unit 40 communicate with each other via a communication cable, the input unit and the display unit each have a connection port as the external communication unit 52 to which one end of the communication cable is connected. In addition, the control communication unit 40 has a connection port as the scope communication unit 43 to which the other end of the communication cable is connected. In this case, the external setting device and the control communication unit 40 can transmit and receive information stably as compared with a case of wireless communication.

In a case where the external setting device and the control communication unit 40 communicate wirelessly, the input unit and the display unit each have a wireless communication device as the external communication unit 52.

The external setting device may be, for example, the function panel 15 provided in the machine base 11 of the loom 10. The function panel 15 has, for example, buttons as the input unit and a display screen as the display unit. The function panel 15 may be a touch panel that serves as both the input unit and the display unit.

In a case where the function panel 15 and the control communication unit 40 communicate with each other via a communication cable, the function panel 15 has a connection port as the external communication unit 52 to which one end of the communication cable is connected. In addition, the control communication unit 40 has a connection port as the scope communication unit 43 to which the other end of the communication cable is connected. In this case, the function panel 15 and the control communication unit 40 can transmit and receive information stably as compared with the case of wireless communication.

When the function panel 15 and the control communication unit 40 communicate wirelessly, the function panel 15 has a wireless communication device as the external communication unit 52.

In this way, when the external setting device is the function panel 15, the captured image data is transmitted to the function panel 15 of the machine base 11. Therefore, for example, as compared with a case where the external setting device is portable as the external setting terminal 102, leakage of the captured image data is less likely to occur.

The machine base 11 may include a machine base control unit that controls the machine base 11. In this case, the machine base control unit may automatically input the setting information relating to the light emitter 32 according to the arrangement of the loom stroboscope 101 relative to the loom 10 and the operating conditions of the machine base 11.

The machine base 11 may also have a data processing unit that processes the captured image data. The machine base control unit may control the machine base 11 according to the processing result by the data processing unit. The setting information relating to the trigger signal is not limited to the delay angle.

The setting information relating to the trigger signal may be, for example, a variation range of the delay angle or a variation width within the variation range. In this case, the trigger information transmission unit 41c sets the delay angle. In detail, the trigger information transmission unit 41c sets a plurality of delay angles by changing the delay angle by the variation width set within the set variation range. The trigger information transmission unit 41c transmits the set delay angle to the trigger control unit 35 as setting information relating to the trigger signal.

The setting information relating to the trigger signal may be, for example, the number of times of outputting the trigger signal relative to the number of rotations of the main shaft. Specifically, in the above embodiment, the trigger signal is output once every time the main shaft rotates once, that is, every time the external input signal is input once. However, the trigger signal may be set to be output once every two rotations of the main shaft, that is, once every two inputs of the external input signal.

The setting information relating to the camera 33 is not limited to the exposure time, gain, gamma, and white balance.

For example, the camera 33 may have a motor that adjusts the position of the lens. In this case, the setting information relating to the camera 33 may include focus.

For example, the loom stroboscope 101 may include a connection port to which an external memory such as a USB or an SD card can be connected. In this case, the setting information relating to the camera 33 may include whether or not the captured image data needs to be stored in the external memory.

If the camera 33 is configured to capture an image in synchronization with the light emission of the light emitter 32, the trigger control unit 35 does not necessarily need to transmit a trigger signal to the camera 33.

The camera 33 may capture an image continuously. In this case, the captured image data is a moving image.

The object to be observed by the loom stroboscope 101 and the observation system 100 is not limited to the weft yarn. For example, the object to be observed may be the loom 10 itself.

### Reference Signs List

- 10: loom
- 11: machine base
- 15: function panel as external setting device
- 30: strobe unit
- 31: housing
- 31a: first surface
- 31b: second surface
- 32: light emitter
- 33: camera
- 34: operation unit
- 40: control communication unit
- 41a: light emitter control unit as device control unit
- 41b: camera control unit as device control unit
- 42: captured image data storage unit
- 43: scope communication unit
- 44: data generation unit
- 51: touch panel as input unit and display unit
- 52: external communication unit
- 100: observation system
- 101: loom stroboscope
- 102: external setting terminal as external setting device
- S: observation screen
- S1: setting screen
- S2: captured image data display screen

## Claims

1. A loom stroboscope comprising:
a strobe unit including
a housing having a rectangular parallelepiped shape and having a first surface and a second surface on a side of the housing opposite to the first surface,
a light emitter provided on the first surface of the housing such that an optical axis of the light emitter extends in a direction perpendicular to a longitudinal direction of the housing,
a camera provided on the first surface of the housing so as to capture an image of an area illuminated by the light emitter, and
an operation unit provided on the second surface of the housing, and configured to operate the light emitter and the camera; and
a control communication unit including
a device control unit configured to control the light emitter and the camera,
a scope communication unit configured to communicate with an external setting device on which setting information relating to the light emitter and the camera is input, and
a captured image data storage unit configured to store a captured image data captured by the camera, **characterized in that**
the device control unit controls the light emitter and the camera based on the setting information relating to the light emitter and the camera received from the external setting device via the scope communication unit, and
the scope communication unit transmits the captured image data stored in the captured image data storage unit to the external setting device.

2. The loom stroboscope according to claim 1, **characterized in that** the strobe unit and the control communication unit are separate bodies.

3. The loom stroboscope according to claim 1 or 2, further comprising
a data generation unit that generates a data set including a source code based on which an observation screen is generated and the captured image data, the observation screen including a setting screen on which the setting information is input and a captured image data display screen on which the captured image data is displayed, **characterized in that**
the scope communication unit transmits the data set generated by the data generation unit to the external setting device.

4. An observation system comprising:
a loom stroboscope including
a strobe unit including
a housing having a rectangular parallelepiped shape and having a first surface and a second surface on a side of the housing opposite to the first surface,
a light emitter provided on the first surface of the housing such that an optical axis of the light emitter extends in a direction perpendicular to a longitudinal direction of the housing,
a camera provided on the first surface of the housing so as to capture an image of an area illuminated by the light emitter, and
an operation unit provided on the second surface of the housing and configured to operate the light emitter and the camera,
a control communication unit including
a device control unit configured to control the light emitter and the camera,
a scope communication unit, and
a captured image data storage unit configured to store a captured image data captured by the camera; and
an external setting device including an input unit from which setting information relating to the light emitter and the camera is input, a display unit, and an external communication unit configured to communicate with the scope communication unit, **characterized in that**
the external setting device transmits the setting information relating to the light emitter and the camera input from the input unit to the loom stroboscope via the external communication unit,
the device control unit controls the light emitter and the camera based on the setting information received from the external setting device via the scope communication unit,
the loom stroboscope transmits the captured image data stored in the captured image data storage unit to the external setting device via the scope communication unit, and
the display unit displays the captured image data received by the external communication unit from the loom stroboscope.

5. The observation system according to claim 4, **characterized in that**
the external setting device is a function panel provided in a machine base of a loom.
